(19) Europäisches Patentamt
European Patent Office
Office européen des brevets

(11) Veröffentlichungsnummer: **0 106 082**
**B1**

(12) **EUROPÄISCHE PATENTSCHRIFT**

(45) Veröffentlichungstag der Patentschrift: **17.12.86**

(51) Int. Cl.⁴: **C 08 G 79/04**, C 08 L 85/02

(21) Anmeldenummer: **83108490.0**

(22) Anmeldetag: **29.08.83**

(54) **Neue Polyphosphate, deren Herstellung und Verwendung.**

(30) Priorität: **10.09.82 DE 3233615**

(43) Veröffentlichungstag der Anmeldung: **25.04.84 Patentblatt 84/17**

(45) Bekanntmachung des Hinweises auf die Patenterteilung: **17.12.86 Patentblatt 86/51**

(84) Benannte Vertragsstaaten: **DE FR GB IT NL**

(56) Entgegenhaltungen:
**EP-A-0 021 260**
**DE-A-2 421 977**
**DE-A-2 701 493**
**DE-A-2 901 665**
**DE-B-2 615 038**
**US-A-3 271 329**

**Patent Abstracts of Japan Band 2, Nr. 85, 12. Juli 1978 Seite 1270C78**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Serini, Volker, Dr., Scheiblerstrasse 81, D-4150 Krefeld (DE)**
Erfinder: **Mayska, Paul Johannes, Dr., Bodelschwinghstrasse 18, D-4150 Krefeld 1 (DE)**
Erfinder: **Block, Hans- Dieter, Dr., Roggendorfstrasse 65, D-5000 Koeln 80 (DE)**
Erfinder: **Freitag, Dieter, Dr., Hasenheide 10, D-4150 Krefeld 1 (DE)**

**EP 0 106 082 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft neue Polyphosphate, deren Herstellung und Verwendung.

Die neuen Polyphosphate sind dadurch gekennzeichnet, daß sie 0,5 bis 100 Mol-% Phosphateinheiten der Formeln (I) und/oder (II)

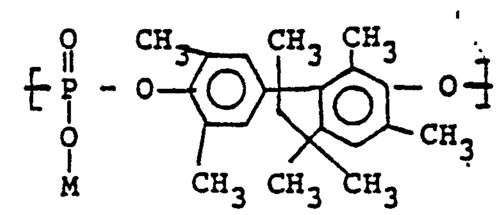

(I),

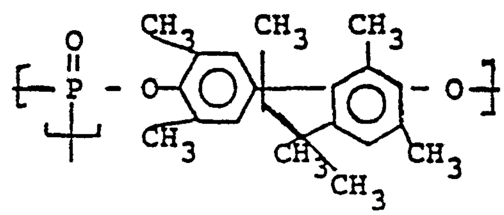

(II),

worin

M H, Alkalimetall, wie Li, Na, K, 1/2 Erdalkalimetall wie Mg, Ca, Ba, Sr, Y oder -R-OH bedeutet, wobei

Y ein Alkyl-, Cycloalkyl-, Aryl- oder Alkylaryl-Rest ist und

-R- für einen o-, m- oder p-Phenylenrest oder einen Rest der Formel (IIa)

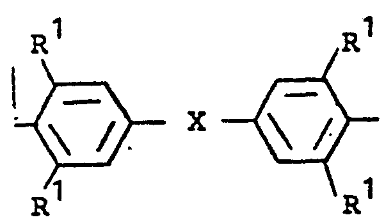

(IIa),

in welcher

$R^1$ für Wasserstoff, Halogen, wie Chlor und Brom, und $C_1$-$C_3$-Alkyl steht, und

X für einen $C_1$-$C_5$-Alkylen- oder Alkylidenrest, einen $C_3$-$C_6$-Cycloalkylen- oder Cycloalkylidenrest, eine Einfachbindung, -S- oder einen Rest der Formel (IIb) steht,

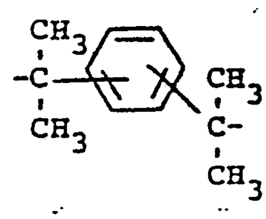

(IIb)

in welcher die beiden Alkylsubstituenten in o-, moder p-Stellung zueinander stehen können, oder für einen Rest der Formel (IIc) steht,

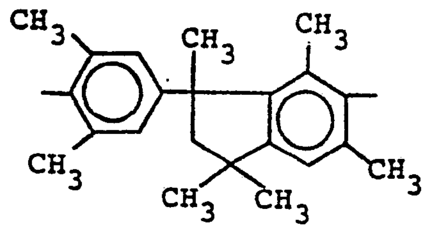 (IIc)

und
95,5 bis 0 Mol% Phosphateinheiten der Formeln (III) und/ oder (IV),

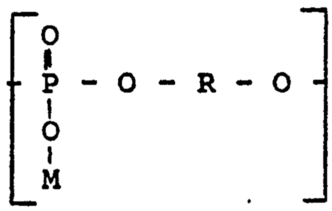 (III)

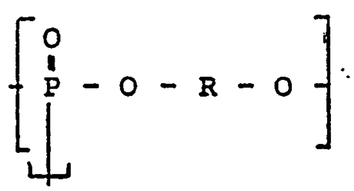 (IV)

in denen
M die bei Formel (I) angegebene Bedeutung hat und
R für o-, m-, p-Phenylen oder einen Rest der Formel (IIa) steht, jedoch nicht für einen Rest der Formel (IIc), enthalten.

Die erfindungsgemäßen Polyphosphate können durch ein Verfahren hergestellt werden, das dadurch gekennzeichnet ist, daß 0,5 - 100 Mol% 1,1,3,4,6-pentamethyl-3-(3,5-dimethyl-4-hydroxyphenyl)-indan-5-ol der Formel

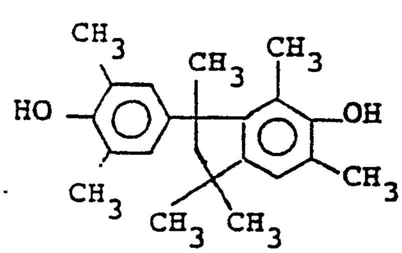 (V),

und 95,5 bis 0 Mol% Hydrochinon, Resorcin oder aromatische Diole der allgemeinen Formel

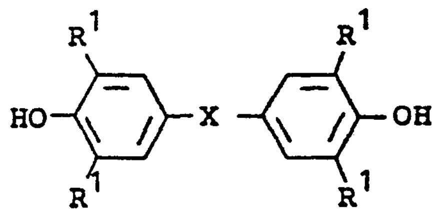
(VI),

worin

worin
$R^1$ und X die bei Formel (IIa) angegebene Bedeutung haben,
mit mindestens einem phosphorsäureester der Formel

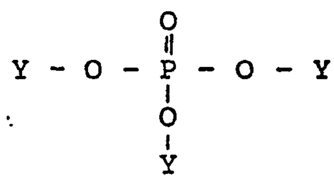
(VII)

in der
Y gleich oder ungleich ist und die bei Formel (I) und (II) angegebene Bedeutung hat
mit Hilfe basischer Alkali- oder Erdalkaliverbindungen und unter Abspaltung von Alkoholen und/oder phenolen bei 50 - 350° C umgesetzt werden.

Die nach dem erfindungsgemäßen Verfahren hergestellten Polyphosphate weisen Verzweigungsstellen auf und enthalten ionische Gruppen.

Aromatische Diole der Formel (VI) sind zum Beispiel
Dihydroxydiphenyle, Bis-(hydroxyphenyl)-alkane, Bis-(hydroxyphenyl)-cycloalkane, Bis-(hydroxyphenyl)-sulfide, α,α'-Bis-(4-hydroxyphenyl)-diisopropylbenzole.

Geeignete aromatische Diole der Formel (VI) sind beispielsweise in den US-PS 3 028 365, 2 999 835, 3 148 172, 3 271 368, 2 991 273, 3 271 367, 3 780 087, 3 014 891, 2 999 846, in DE-OS 2 063 050, 2 211 957, 1 570 703, 2 329 585, 2 329 686 in der Monographie Hermann Schnell, Chemistry and physics of polycarbonates, polymer Reviews, Volume 9, Interscience publishers New York, 1964, beschrieben.

Von den aromatischen Diolen der Formel (VI) werden die bevorzugt, die der Formel (VIII) entsprechen,

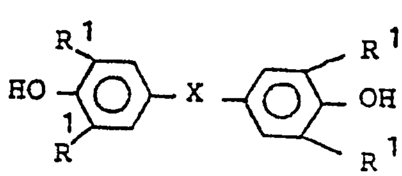
(VIII),

in der
R H oder $CH_3$ bedeutet und
X einen $C_1$-$C_5$-Alkylen- oder Alkylidenrest, einen $C_5$-$C_6$Cycloalkylen- oder Cycloalkylidenrest, eine Einfachbindung, - S - oder

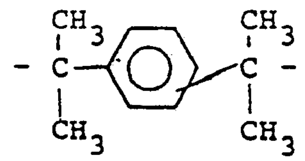

bedeutet.
Bevorzugte aromatische Diole der Formel (VIII) sind beispielsweise:
2,2- Bis-(4-hydroxyphenyl)-propan
2,2- Bis-(4-hydroxyphenyl)-butan
2,4- Bis-(4-hydroxyphenyl)-2-methylbutan
1,1- Bis-(4-hydroxyphenyl)-cyclohexan
Bis-(4-hydroxyphenyl)
Bis-(4-hydroxyphenyl)-sulfid
α,α'- Bis-(4-hydroxyphenyl)-p-diisopropylbenzol
2-(3-Methyl-4-hydroxyphenyl)-2-(4-hydroxyphenyl)-propan
2,2-Bis-(3-methyl-4-hydroxyphenyl)-propan
2-(3,5-Dimethyl-4-hydroxyphenyl)-2-(4-hydroxyphenyl)-propan
2-(3-Methyl-4-hydroxyphenyl)-2-(3,5-dimethyl-4-hydroxy-phenyl)-propan
Bis-(3,5-dimethylphenyl-4-hydroxyphenyl)-methan
1,1-Bis-(3,5-dimethylphenyl-4-hydroxyphenyl)-ethan
2,2-Bis-(3,5-dimethylphenyl-4-hydroxyphenyl)-propan
2,2-Bis-(3,5-dimethylphenyl-4-hydroxyphenyl)-butan
2,4-Bis-(3,5-dimethylphenyl-4-hydroxyphenyl)-2-methylbutan
3,3-Bis-(3,5-dimethylphenyl-4-hydroxyphenyl)-pentan
1,1-Bis-(3,5-dimethylphenyl-4-hydroxyphenyl)-cyclopentan
1,1-Bis-(3,5-dimethylphenyl-4-hydroxyphenyl)-cyclohexan
Bis-(3,5-dimethylphenyl-4-hydroxyphenyl)
Bis-(3,5-dimethylphenyl-4-hydroxyphenyl)-sulfid
α,α'-Bis-(3,5-dimethylphenyl-4-hydroxyphenyl)-p-diiso-propylbenzol

Bevorzugte aromatische Diole der Formel (VIII) sind die, in denen $R^1$ zumindest teilweise $CH_3$ bedeutet, insbesondere jedoch, wenn zwei Methylgruppen orthoständig zu einer phenolischen OH-Gruppe stehen.

Besonders bevorzugt von den aromatischen Diolen der Formel (VIII) sind die, in denen alle Substituenten $R^1$ = $CH_3$ bedeuten. Von diesen wiederum werden folgende aromatische Diole bevorzugt:
Bis-(3,5-dimethyl-4-hydroxyphenyl)-methan
2,2-Bis-(3,5-dimethyl-4-hydroxyphenyl)-propan.

Davon wird wiederum letzteres bevorzugt:
2,2-Bis-(3,5-dimethyl-4-hydroxyphenyl)-propan.

In den Formeln (I) und (II) sowie in der Formel (VII) der phosphorsäureester bedeutet Y monovalente organische Reste, die gleich oder verschieden sein können. Diese Reste können Alkyl-einschließlich Cycloalkyl-, Aryl- und Alkylarylreste bedeuten, die substituiert sein können, z.B. durch Halogen. Beispiele für Alkylgruppen sind: Methyl, Ethyl, propyl, Butyl, pentyl, Hexyl, Heptyl, Octyl, Nonyl, Decyl, Undecyl, Dodecyl und deren Isomere, so beispielsweise Neopentyl, 3,5,5'-Trimethylhexyl, 3-Methylhexyl, 2-Ethylhexyl, 2, 5,5-Trimethylhexyl, weiterhin Cyclohexyl, 2-Chlorethyl und 2,3-Dibrompropyl. Beispiele für Aryl- und Alkylarylreste sind: Phenyl, o-, m-, p-Methylphenyl, 2,6-Di-methylphenyl, 2,4-Dimethylphenyl, 2,4,6-Trimethylphenyl, Diphenyl, 2-und 4-Isopropylphenyl, Nonylphenyl, 4-tert.-Butylphenyl, 2,4,6-Trichlorphenyl, 4-Chlorphenyl, 4-Bromphenyl, 2, 4, 6-Tribromphenyl, Naphtyl, Benzyl. Von den genannten Resten Y werden die Arylreste bevorzugt, insbesonders die halogenfreien. Von diesen wiederum werden die Phenyl-, die o-, m-, p-Methylphenyl- und die 2,6-Dimethyl-phenylreste besonders bevorzugt.

Phosphorsäureester der Formel (VII) sind beispielsweise:
Bis-(phenyl)-methylphosphat
Bis-(ethyl)-phenylphosphat
Bis-(ethyl)-2,6-dimethylphosphat
Bis-(phenyl)-ethylphosphat
Tris-(2-chlorethyl)-phosphat
Bis-(phenyl)-2-chlorethylphosphat
Bis-(butyl)-phenylphosphat
Bis-(phenyl)-butylphosphat
Bis-(neopentyl)-phenylphosphat
Bis-(4-methylphenyl)-2-ethylhexylphosphat
Bis-(2-ethylhexyl)-phenylphosphat
Bis-(2-ethylhexyl)-4-methylphenylphosphat
Bis-(phenyl)-2-ethylhexylphosphat
Tris-(octyl)-phosphat
Bis-(phenyl)-octylphosphat
Bis-(octyl)-phenylphosphat
Bis-(3,5,5-trimethylhexyl)-phenylphosphat
Bis-(2,5,5-trimethylhexyl)-4-methylphenylphosphat
Bis-(phenyl)-isodecylphosphat
Bis-(dodecyl)-4-methylphenylphosphat
Bis-(dodecyl)-phenylphosphat
Tris-(phenyl)-phosphat
Tris-(2-methylphenyl)-phosphat
Tris-(4-methylphenyl)-phosphat
Bis-(2-methylphenyl)-phosphat
Bis-(4-methylphenyl)-phosphat
Bis-(phenyl)-2-methylphenylphosphat
Bis-(phenyl)-4-methylphenylphosphat
Tris-(isopropylphenyl)-phosphat
Bis-(isopropylphenyl)- phenylphosphat
Bis-(phenyl)-isopropylphenylphosphat
Tris-(nonylphenyl)-phosphat
Tris-(2,6-dimethylphenyl)-phosphat
Bis-(2,6-dimethylphenyl)-phenylphosphat
Bis-(phenyl)-2,6-dimethylphenylphosphat
Bis-(2,6-dimethylphenyl)-4-tert.-butylphenylphosphat
Bis-(2,6-dimethylphenyl)-4-methylphenylphosphat
Bis-(2,6-dimethylphenyl)-3-methylphenylphosphat
Bis-(2,6-dimethylphenyl)-4-isopropylphenylphosphat
Bis-(2,6-dimethylphenyl)-2-isopropylphenylphosphat

Bevorzugte Phosphorsäureester der Formel (VII) sind Triarylester.

Besonders bevorzugte Phosphorsäureester der Formel (VII) sind Triarylester mit drei gleichen Arylresten oder mit mindestens zwei 2,6-Dimethylphenylresten, z.B:
Tris-(phenyl)-phosphat
Tris-(2-methylphenyl)-phosphat
Tris-(4-methylphenyl)-phosphat
Tris-(isopropylphenyl)-phosphat
Tris-(2,6-dimethylphenyl)-phosphat
Bis-(2,6-dimethylphenyl)-phenylphosphat
Bis-(2,6-dimethylphenyl)-2-methylphenylphosphat
Bis-(2,6-dimethylphenyl)-4-methylphenylphosphat
Bis-(2,6-dimethylphenyl)-isopropylphenylphosphat

Besonders bevorzugte Triarylester sind Triphenylphosphat und Tri-(2,6-dimethylphenyl)-phosphat.

Erfindungsgemäß als Katalysatoren einsetzbar sind basische Alkali- und Erdalkaliverbindungen. Diese können anorganischer sowie organischer Natur sein. Solche Verbindungen sind beispielsweise:

Metalle, z.B. Li, Wa, K, Ca; Hydride, z.B. LiH, NaH, KH, $CaH_2$; Oxide, z.B. $Li_2O$, $Na_2O$, $K_2O$, CaO, BaO; Hydroxide, z.B. LiOH, WaOH, KOH; $Ba(OH)_2$, $Sr(OH)_2$, Ca $(OH)_2$; Alkaliborhydride, z.B. $NaBH_4$; Amide der Alkalimetalle, z.B. Li-, Na- und R-amid; Alkali- und Erdalkalialkoholate, z.B. Methylate, Ethylate, Propylate, Butylate, Cyclohexanolate des Li, Na, K oder Ca; Phenolate, z.B. die Li-, Na-, K-Salze des Phenols, des o-, m-, p-Kresols, des 2,6-Dimethylphenols; Bis-Alkalisalze von aromatischen Dihydroxyverbindungen, die Li-, Na, und K-Salze des 2,2-Bis-(4-hydroxyphenyl)-propans, oder des 2,2-Bis-(3,5-di-methyl-4-hydroxyphenyl)-propans.

Bevorzugt werden die Alkaliverbindungen und von diesen die Na- und K-Verbindungen. Besonders bevorzugt werden davon wiederum die Hydroxide, Alkoholate, Phenolate und Bisphenolate. Ganz besonders bevorzugt wird das Na-Phenolat.

Die erfindungsgemäße Umsetzung der aromatischen Diole mit den Phosphorsäureestern wird im allgemeinen wie folgt vorgenommen: Der Phosphorsäureester wird vorgelegt und gegebenenfalls aufgeschmolzen. Zu dem Phosphorsäureester wird das aromatische Diol gegeben und unter Erwärmen gelöst. Dann wird der Katalysator zugegeben. Bei erhöhter Temperatur setzt dann die Abspaltung von Alkohol bzw. Phenol ein. Der abgespaltene Alkohol bzw. das abgespaltene phenol werden abdestilliert und das entstandene Polyphosphat wird als Rückstand erhalten.

Bei Einsatz mehrerer aromatischer Diole oder mehrerer Phosphorsäureester wird analog verfahren. Die Reihenfolge des Zusammengebens der Ausgangskomponenten kann anders sein als oben beschrieben. Auch ist für die Reaktion eine Löslichkeit der Komponenten ineinander nicht unbedingt notwendig, wenn auch günstig. Der Zugabezeitpunkt des Katalysators nach dem Aufschmelzen der Ausgangskomponenten ist nicht zwingend. Die Zugabe kann auch vor oder während des Aufschmelzens der Ausgangskomponenten erfolgen. Es kann von Nutzen sein, noch während der Reaktion Katalysator nachzugeben, um eine ausreichende Reaktionsgeschwindigkeit aufrechtzuerhalten. Der Katalysator braucht nicht oder nicht voll in der Reaktionsmischung gelöst zu sein, obwohl dies für die Reaktion und die Qualität des erhaltenen Produktes günstig sein kann.

Das Aufschmelzen der Ausgangskomponenten erfolgt im allgemeinen bei Temperaturen von 50 - 300° C, bevorzugt bei 100 - 250° C, besonders bevorzugt bei 125 - 225° C.

Die Zugabe des Katalysators erfolgt bevorzugt nach dem Aufschmelzen der Ausgangskomponenten. Besonders günstig für den Start und den Fortgang der Reaktion ist eine Zugabe des Katalysators bei 100 - 250° C, bevorzugt bei 125 - 225° C.

Die Reaktionstemperatur wird so niedrig wie möglich gehalten. Im allgemeinen liegt sie bei 100 - 350° C, bevorzugt bei 125 - 300° C, besonders bevorzugt bei 150-250° C.

Die Reaktionstemperatur liegt in der Anfangsphase, in der der Hauptteil des Alkohols oder Phenols (ca. 90%) abgespalten wird, bei möglichst niedriger Temperatur, bevorzugt bei 100 - 250° C, besonders bevorzugt bei 125 - 225° C.

Die Polykondensation erfolgt mit Vorteil unter vermindertem Druck. Im allgemeinen wird bei Drücken zwischen 600 und 0,01 mm Hg, bevorzugt bei Drücken zwischen 400 und 0,025 mm Hg, besonders bevorzugt bei Drücken zwischen 250 und 0,05 mm Hg gearbeitet.

Während im allgemeinen die Abspaltung der Hauptmenge Alkohol bzw. Phenol (ca. 90 %) zwischen 600 und 10 mm Hg erfolgt, werden die Restmengen meist zwischen 10 und 0,01 mm Hg abdestilliert.

Etwa notwendig werdender Druckausgleich wird im allgemeinen mit Inertgas geschaffen, z.B. durch $CO_2$ oder $N_2$, so daß Luftsauerstoff von dem Reaktionsmedium möglichst ferngehalten wird. Auch das Aufschmelzen der Reaktanten erfolgt im allgemeinen unter Inertgas.

Der Restgehalt an abgespaltenem Alkohol bzw. Phenol im Umsetzungsprodukt beträgt im allgemeinen unter 2 %, bevorzugt unter 1 %, besonders bevorzugt unter 0,5 % und ganz besonders bevorzugt unter 0,1 % (bezogen auf das erhaltene verzweigte ionomere Polyphosphat).

Bei der Umsetzung der aromatischen Diole der Formeln (V) und (VI) mit Phosphaten werden im allgemeinen 1,0-0,0001, bevorzugt 0,5 - 0,0005, besonders bevorzugt 0,05 - 0,0005 Mol Alkali oder Erdalkali/Mol Phosphat eingesetzt.

Bei Einsatz großer Alkali- oder Erdalkalimengen ist es vorteilhaft, wegen der erhöhten Abspaltungsgeschwindigkeit des Alkohols bzw. des Phenols bei besonders niedriger Temperatur und bei nur leicht reduziertem Druck mit der Polykondensation zu beginnen.

Bei der Herstellung der Polyphosphate nach dem erfindungsgemäßen Verfahren werden die aromatischen Diole und die monomeren Phosphate im Verhältnis 0,66/1 - 2,3/1 Molteile eingesetzt. Bevorzugt werden Verhältnisse von 0,66/1-0,96/1 und 2,3/1 - 1,6/1, besonders bevorzugt werden Verhältnisse von 0,75/1 - 0,96/1 und 2,2/1 - 1,6/1, ganz besonders bevorzugt werden Verhältnisse von 0,8/1 - 0,92/1 und 2,1/1 - 1,7/1.

Die nach dem erfindungsgemäßen Verfahren hergestellten Polyphosphate enthalten Polymereinheiten der Formeln (IX) und/oder (X) und gegebenenfalls (XI) und enthalten Verzweigungsstellen der Formel (XII)

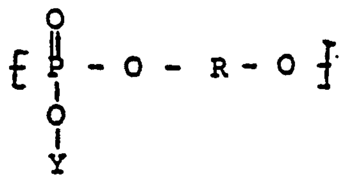

(IX),

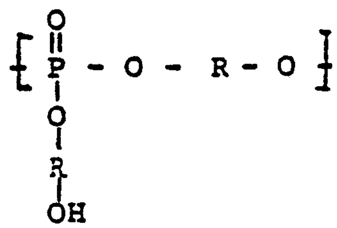

(X),

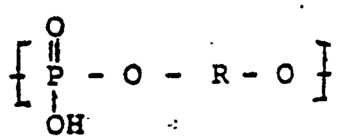

(XI),

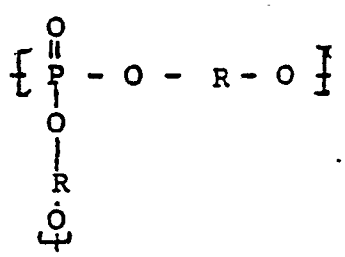

(XII),

sowie Endgruppen der Formeln (XIII), (XIV), (XV) und gegebenenfalls der Formeln (XVI), (XVII) und (XVIII)

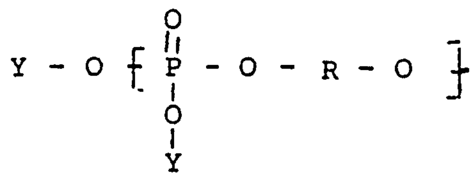

(XIII),

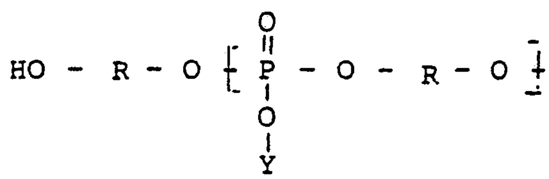

(XIV),

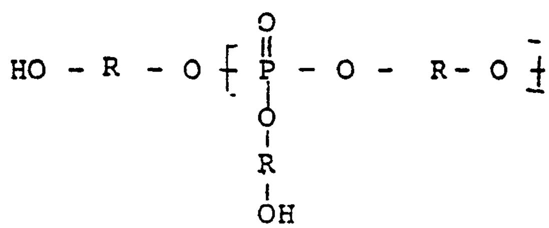

(XV),

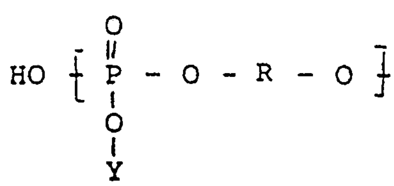

(XVI),

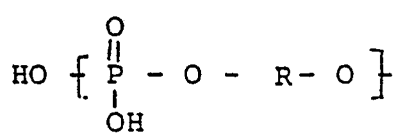

(XVII),

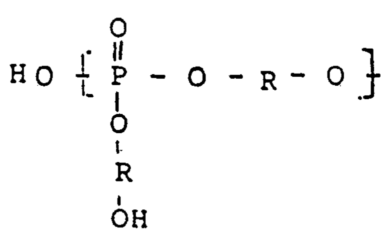

(XVIII),

**Tabelle 1**

Herstellung von Polyphosphaten

| Bsp. | Eingesetzte aromatische Diole (Molverhältnis) | Molverhältnis arom. Diole/TPP | Katalysator Na-Phenolat (Mol/Mol TPP) | Polyphosphat | | | | |
|---|---|---|---|---|---|---|---|---|
| | | | | Konsistenz | Farbe | $\eta_{rel}$ | $\bar{M}_w$ | $T_g$ (°C) |
| 1 | INDAN | 0,90/1 | 0,015 | hart | farblos | 1,08 | 15200 | 123 |
| 2 | INDAN | 1,05/1 | 0,020 | hart | hellgelb | 1,10 | 17600 | 139 |
| 3 | INDAN | 1,75/1 | 0,015 | hart | hellgelb | 1,05 | 8300 | 145 |
| 4 | INDAN/BPA 65/35 | 0,90/1 | 0,010 | hart | farblos | 1,08 | 14500 | 89 |
| 5 | INDAN/TMBPA 65/35 | 0,90/1 | 0,020 | hart | hellgelb | 1,08 | 15700 | 108 |
| 6 | INDAN/TMBPA 15/85 | 0,90/1 | 0,015 | hart | hellgelb | 1,09 | 17200 | 91 |
| 7 | INDAN/TMBPF 65/35 | 0,90/1 | 0,015 | hart | farblos | 1,07 | 13800 | 104 |

INDAN = 1,1,3,4,6-Pentamethyl-3-(3,5-dimethyl-4-hydroxyphenyl)-indan-5-ol

BPA = 2,2-Bis-(4-hydroxyphenyl)-propan

TMBPA = 2,2-Bis-(3,5-dimethyl-4-hydroxyphenyl)-propan

TMBPF = Bis-(3,5-dimethyl-4-hydroxyphenyl)-methan

TPP = Trisphenylphosphat

$\eta_{rel}$ = gemessen in $CH_2Cl_2$, c = 5 g/l

$\bar{M}_w$ = fiktives Gewichtsmittel des Molekulargewichts, aus Gelchromatographie, Eichung BPA-Polycarbonat

$T_g$ = Glasübergangstemperatur aus Differentialthermoanalyse

In den Formeln (IX) bis (XVIII) haben Y und R dieselbe Bedeutung wie in Formel (I).

Die Polymereinheit der Formel (XI) und die Endgruppen der Formeln (XVI), (XVII) und (XVIII) können z.B. vorliegen, wenn z.B. Alkalihydroxide als Katalysatoren eingesetzt werden und Wasser im Umsetzungsgemisch ist.

Die erfindungsgemäßen Polyphosphate enthalten ionische Gruppen, die dadurch entstehen können, daß endständige OH-Gruppen durch Reaktion mit basischen Verbindungen, z.B. durch Reaktion mit den als Katalysator eingesetzten Alkaliverbindungen, Salze, z.B. $-O^{\ominus}M^{\oplus}$, $O^{\ominus}1/2M^{\oplus\oplus}$ bilden, ($Me^{\oplus}$ bedeutet z.B. Alkaliionen, wie $Li^{\oplus}$, $Na^{\oplus}$, $K^{\oplus}$ und $Me^{\oplus\oplus}$ z.B. Erdalkaliionen, wie $Ca^{\oplus\oplus}$, $Ba^{\oplus\oplus}$).

Die Anzahl dieser ionischen Gruppen hängt von der eingesetzten Katalysatormenge ab.

Im allgemeinen werden ionischen Polyphosphate bevorzugt, die ionische Gruppen entsprechend der bevorzugt eingesetzten Katalysatormenge aufweisen.

In besonderen Fällen kann es erwünscht sein, den Gehalt an ionischen Gruppen auf ein besonders hohes oder besonders niedriges Maß zu bringen, z.B. durch Zusatz von Wasser oder Base oder basenbindenden Substanzen wie Dialkylsulfaten wie Dimethylsulfat, Diethylsulfat, oder organischen Säuren wie Toluolsulfonsäure.

Im allgemeinen werden die basenbindenden Substanzen in der gewünschten Menge gegen Schluß der Polykondensation in die Polymerschmelze gegeben. Danach werden noch einige Zeit die Umsetzungsbedingungen aufrechterhalten, um eine Reaktion der Polyphosphate mit den basenbindenden Substanzen zu gewährleisten.

Durch Variation der Molverhältnisse von aromatischem Diol/Phosphat können beim erfindungsgemäßen Verfahren die Struktureinheiten im Polyphosphat variiert werden. Dies kann für den jeweiligen Einsatzzweck von Bedeutung sein. So überwiegen beispielsweise im allgemeinen bei den Molverhältnissen aromatisches Diol/Phosphat gleich 0,66/1-1,49/1 die Struktureinheiten der Formeln (IX) und (XIII) gegenüber den Struktureinheiten der Formeln (X) und (XV), während bei Molverhältnissen aromatisches Diol/Phosphat gleich 1,51 - 2,3/1 die Struktureinheiten der Formeln (X) und (XV) gegenüber den Struktureinheiten der Formeln (IX) und (XIII) überwiegen.

Bei den bevorzugten Molverhältnissen aromatisches Diol/ Phosphat gleich 0,66/1 - 0,96/1 können von den Struktureinheiten der Formeln (IX), (X), (XIII), (XIV) und (XV) nahezu nur Struktureinheiten der Pormeln (IX) und (XIII) und bei den bevorzugten Molverhältnissen von aromatischem Diol/Phosphat 2,5/1 - 2,03/1 nahezu nur Struktureinheiten der Formeln (X) und (XV) im erfindungsgemäßen Polyphosphat erhalten werden.

Im ersten Falle bedeutet das, daß nahezu keine phenolischen OH-Gruppen im erfindungsgemäßen Polyphosphat vorhanden sind (z.B. maximal 0,2 %, bevorzugt maximal 0,1 % phenolisches OH aus aromatischem Diol. Im zweiten Falle bedeutet das, daß nahezu alle phenolischen Gruppen vorhanden sind).

Vorzugsweise werden aromatisches Diol/Phosphat im Verhältnis 0,66/1 - 0,96/1, 0,75/1 - 0,96,/1 und insbesondere 0,8/1 - 0,92/1 oder 2,3/1 - 1,6/1, 2,2/1 - 1,6/1 und insbesondere 2,1/1 - 1,7/1 miteinander umgesetzt. In diesem Falle kann die Kondensation nahezu oder völlig bis zum Ende durchgeführt werden.

Der Polykondensationsgrad kann durch laufende Messung der Schmelzviskosität des Reaktionsmediums verfolgt werden.

Die erfindungsgemäßen Polyphosphate können neben dem erfindungsgemäßen Verfahren auch nach anderen, bisher schon bekannten Verfahren hergestellt werden, beispielsweise:

1) Umsetzung der aromatischen Diole mit Dichloralkyloder Dichlorarylphosphaten mit wasserfreien Metallhalogeniden oder mit Metallen als Katalysator, wie es z.B. in M. Sander und E. Steiniger, J. Macromol., Sci. (Revs.) C 1 (1), 99 - 100 (1967) beschrieben wird.

2) Umsetzung der aromatischen Diole mit Dichloralkyloder Dichlorarylphosphaten mit Katalysatoren wie unter 1) genannt, jedoch in organischen Lösungsmitteln.

3) Umsetzung der aromatischen Diole mit Dichloralkyloder Dichlorarylphosphaten in organischen Lösungsmitteln mit Aminen als Katalysatoren und Säureakzeptoren wie es in der unter 1) genannten Literatur beschrieben wird.

4) Umsetzung der aromatischen Diole mit Phosphoroxychlorid und Phenolen in Gegenwart von Metallen oder wasserfreien Metallhalogeniden, wie es in der DE-OS 27 01 493 beschrieben wird.

Vorzugsweise werden die erfindungsgemäßen Polyphosphate nach dem erfindungsgemäßen Verfahren hergestellt.

Bei den bekannten Verfahren 1) bis 4) treten bei der Phosphatherstellung Probleme auf. Die meisten Probleme dieser Verfahren entsprechen den Problemen des unter 4) genannten Verfahrens, das in der DE-OS 27 01 493 beschrieben ist. Aus diesem Grunde sollen im folgenden zunächst dieses Verfahren mit dem erfindungsgemäßen Verfahren und die nach diesen beiden Verfahren erhältlichen Polyphosphate verglichen werden.

In der DE-OS 2 701 493 wird ein Verfahren zur Herstellung von Polyphosphat beschrieben, bei dem in zwei Stufen zunächst Phosphoroxychlorid mit Bisphenol, dann das Reaktionsprodukt daraus mit Phenol in Gegenwart wasserfreier aromatischer Halogenide, wie z.B. LiCl, bei Temperaturen bis zu etwa 300° C miteinander umgesetzt werden. Dabei wird unter Bildung von oligomeren Produkten HCl abgespalten und aus dem Reaktionsprodukt entfernt. Weiterhin werden überschüssiges Phosphoroxychlorid und überschüssiges Phenol abdestilliert. Die Endprodukte enthalten noch restliches Chlor aus dem Phosphoroxychlorid und die als Katalysatoren verwendeten anorganischen Chloride.

Beim erfindungsgemäßen Verfahren sind die Ausgangsstoffe leichter zu handhaben, da statt des agressiven

Phosphoroxychlorids inerte Phosphorsäureester einsetzbar sind.

Dann stellt das erfindungsgemäße Verfahren ein einfaches Einstufenverfahren dar, während das Verfahren der DE-OS 2 701 493 bevorzugt zweistufig durchzuführen ist, was erhöhten technischen Aufwand erfordert.

Das erfindungsgemäße Verfahren kann vorteilhaft in üblichen Stahlkesseln durchgeführt werden, da keine Korrosionsprobleme auftreten.

Das Verfahren der DE-OS 2 701 493 erfordert dagegen wegen der Korrosionsgefahr durch eingesetztes Phosphoroxychlorid und sich entwickelndes HCl-Gas aufwendige Glas- oder Emailapparaturen. Zudem hat das Verfahren der DE-OS 2 701 493 gegenüber unserem Verfahren den Nachteil, daß bei der hohen Reaktionstemperatur durch das sich bildende HCl-Gas im allgemeinen eine starke Zersetzung des Bisphenols zu stark farbigen Nebenprodukten einsetzt.

Das erfindungsgemäße Verfahren zur Herstellung von verzweigten Polyphosphaten hat außerdem gegenüber der DE-OS 2 701 493 den Vorteil, daß hochmolekulare Produkte erhalten werden können, ohne daß Vernetzung eintritt.

Die erfindungsgemäß hergestellten Polyphosphate können thermoplastisch verarbeitet werden, z.B. an Extrudern, Walzen oder Knetern und Formen ohne Korrosion zu verursachen.

Weiterhin enthalten die nach unserem Verfahren erhältlichen Polyphosphate keine Reste von an Phosphor gebundenem Chlor, welche ebenfalls bei der Verarbeitung oder Anwendung zu Korrosionsschäden führen. Auch die Metallhalogenidgehalte solcher Polyphosphate können Korrosionsschäden, insbesondere an Verarbeitungsmaschinen bei hoher Temperatur verursachen. Die nach unserem neuen Verfahren erhältlichen Polyphosphate, sind weiterhin außerordentlich vorteilhaft bei der Mischung mit vielen anderen Polymeren verwendbar.

Weiterhin sind gute Eigenschaften der erfindungsgemäß hergestellten Polyphosphate z.B. Haftung auf verschiedenen Materialien, die geringe elektrostatische Aufladbarkeit, die Bedruckbarkeit und die Verarbeitungsstabilität in der Mischung mit anderen Polymeren und Zusätzen.

Die nach den bekannten Verfahren 1), 2) 3) und 4) hergestellten Polyphosphate haben diese Vorteile nicht.

Es war überraschend, daß das 1,1,3,4,6-Pentamethyl-3-(3,5-dimethyl-4-hydroxyphenyl)-indan-5-ol zu Polyphosphaten umgesetzt werden kann. Die Eigenschaftskombinationen dieser Phosphate eröffnen eine Reihe von Anwendungen, für die bisher bekannte Polyphosphate nicht einsetzbar sind.

Die erfindungsgemäßen Polyphosphate stellen Polymere mit technisch interessanten Eigenschaften dar. Sie enthalten 0,5 - 100 Mol-%, bevorzugt 60 - 100 Mol-% oder 1 - 40 Mol-%, besonders bevorzugt 80 - 100 Mol-% oder 2 - 15 Mol-%, ganz besonders 100 Mol-% der Formeln (I) und/oder (II).

Sie können bei 20°C zähflüssige oder mehr oder weniger plastische Harze darstellen. Sie weisen dann Glastemperaturen unter 20°C auf. Sie stellen vorzugsweise harte thermoplastische Harze dar, die Glastemperaturen $T_g$ über 20°C besitzen. Besonders bevorzugt sind solche mit Glastemperaturen $T_g$ über 40°C. Ganz besonders bevorzugt sind solche mit Glastemperaturen über 70°C, insbesondere über 100°C.

Die Polyphosphate dieser Erfindung haben fiktive Molekulargewichte $\bar{M}_W$, (gemessen durch Gelchromatographie, Eichung mit BPA-Polycarbonat), von 1600 - 150.000, bevorzugt von 2300 bis 50000, besonders bevorzugt von 3200-25000 und ganz besonders bevorzugt von 5000 - 20.000.

Die mittleren Polykondensationsgrade $\bar{P}$ der Polyphosphate liegen im allgemeinen bei $\bar{P}$ = 3 - 30, bezogen auf Phosphorgruppan im Polyphosphat. Bevorzugt werden Polykondensationsgrade von $\bar{P}$ = 4 - 25, besonders bevorzugt 7-20.

Die relative Viskosität der Polyphosphate dieser Erfindung liegt im allgemeinen bei 1,01 - 1,20, bevorzugt bei 1,02 - 1,18, besonders bevorzugt bei 1,03 - 1,15 (gemessen in $CH_2Cl_2$, c = 0,5 g/l).

Die Erfindung umfaßt weiterhin die Verwendung der Polyphosphate.

Die erfindungsgemäßen Polyphosphate zeigen hohe Glasübergangstemperaturen und hohe Wärmestandfestigkeiten. Sie lassen sich bei relativ niedrigen Temperaturen verarbeiten, da die Schmelzviskosität niedrig ist. Von Vorteil ist weiterhin ihre relativ hohe Strukturviskosität der Schmelzen, die hohe Temperaturstabilität und die gute Verarbeitungsstabilität. Sie weisen eine gute Kriechstromfestigkeit auf, weiterhin sind sie gegenüber hydrolytischen Einflüssen wenig empfindlich, z.B. gegen wäßrige Säuren und Alkalien, Ammoniak und Amine. Ihre Löslichkeit, insbesondere in Lacklösemitteln ist beachtlich. Überzüge aus ihnen lassen sich durch Tempern oder Bestrahlung vernetzen und sind gut pfropfbar (z.B. radikalische). Sie sind außerdem flammwidrig, das heißt sie brennen selbst in der Flamme kaum und weisen gute Haftung auf verschiedenen Materialien wie Glas, Metall und Holz auf.

Sie zeigen weiterhin gute Metallhaftung geringe elektrostatische Aufladbarkeit und eine gute Bedruckbarkeit, auch in Mischung mit anderen Polymeren. Sie sind als Zusätze zu anderen Polymeren geeignet, insbesondere die Polyphosphate mit höheren Glasübergangstemperaturen. Diese sind günstig für Lagerung und Transport, da sie praktisch keine Tendenz zum Verbacken zeigen. Weiterhin sind sie geeignet als Mischungspartner für andere Polymere, da sie die Wärmestandfestigkeit der Mischungen höchstens geringfügig herabsetzen.

Die erfindungsgemäßen Polyphosphate bewirken, bereits in geringen Mengen anderen Polymeren zugesetzt, eine Erhöhung der Flammwidrigkeit, gegebenenfalls in Gegenwart anderer Zusätze, wie Halogenverbindungen und Metalloxide, weiterhin eine Erhöhung der Fließfähigkeit, eine Stabilisierung gegen Verfärbung und einen Polymerabbau (z.B. durch Wärme- und Sauerstoffeinwirkung, Hydrolyse) und eine Erhöhung der Verarbeitungsstabilität.

Die Polyphosphate dieser Erfindung sind vielseitig nutzbar, sowohl für Duroplaste als auch für Thermoplaste.

Sie können alleine als Kleber und Kitte sowie für Beschichtungen oder Formkörper eingesetzt werden, wobei ihnen ihre gute Haftung auf verschiedenen Materialien, wie z.B. Glas, Metall und Holz, ihre Flammwidrigkeit, ihre niedrige Schmelzviskosität und ihre Hydrolysestabilität zugutekommen.

Thermoplaste, die durch die erfindungsgemäßen Polyphosphate mit Vorteil modifiziert werden können, sind beispielsweise Homo- und Copolymerisate des Styrols und seiner Derivate, der Acryl- und Methacrylverbindungen, des Maleinsäureanhydrids und des Vinylchlorids, sowie deren kautschukmodifizierte Varianten. Solche Homo- und Copolymerisate sind beispielsweise Polystyrol, Styrol-Acrylnitril-Copolymer, -Methylstyrol-Acrylnitril-Copolymer, Styrol-Maleinsäureanhydrid-Copolymer, Styrol-Acrylnitril-Maleinsäureanhydrid-Copolymer, Polymethylmethacrylat, Styrol-Methylmethacrylat-Copolymer, Styrol-Acrylnitril-Methylmethycrylat-Copolymer und Polyvinylchlorid. Kautschukmodifizierte Varianten solcher Polymerisate sind beispielsweise ABS-Polymere und HIPS-Polymere. Weitere Thermoplaste, die mit den erfindungsgemäßen Polyphosphaten modifizierbar sind, sind z.B. Polyamide, Celluloseester, aromatischaliphatische Polyester, z.B. Polyethylen- und Polybutylenterephthalat, aromatische Polyester, aromatische Polycarbonate, Polysulfone, Polyethersulfone und insbesondere Polyphenylenether und deren Mischungen mit Homo- oder Copolymeren des Styrols, z.B. Mischungen aus Poly-(2,6-dimethyl-p-phenylenoxid) und kautschukmodifiziertem Polystyrol, z.B. HIPS (High impact Polystyrene). Duroplaste können ebenfalls mit Vorteil durch die verzweigten, ionomeren Polyphosphate der Erfindung modifiziert werden. Sie werden den Duromeren, wie z.B. Phenol harzen, Polyurethansystemen, Melaminharzen, Epoxidharzen, ungesättigten Polyesterharzen und anderen vernetzenden Polymeren vor der Aushärtung zugemischt.

**Beispiele**

Beispiel 1: Herstellung eines Polyphosphats aus 1,1,3,4,6-Pentamethyl-3-(3,5-dimethyl-4-hydroxyphenyl)-indan-5-ol und Triphenylphosphat

In einem mit Rührer versehenen Kolben werden 326,1 g (1 Mol) Triphenylphosphat aufgeschmolzen und auf 200° C erhitzt. Dann werden 292,1 g (0,9 Mol) 1,1,3,4,6-Pentamethyl-3-(3,5-dimethyl-4-hydroxyphenyl)-indan-5-ol zugesetzt und gelöst. Dazu werden 116,1 g (0,02 Mol) Na-Phenolat gegeben und ebenfalls gelöst. Bei 200° C wird dann langsam der Druck bis auf 200 mm Hg vermindert und das freiwerdende Phenol abdestilliert. Bei Nachlassen der Phenolabspaltung wird dann der Druck langsam weiter bis auf 0,2 mm Hg abgesenkt und weiter Phenol abgezogen. Nach dieser Druckminderung wird der Ansatz noch 30 Min. bei 220° C und 0,2 mm Hg gehalten und restliches Phenol abgezogen. Der Ansatz wird während des Aufschmelzens und der Kondensation unter $N_2$ gehalten und gerührt. Als Rückstand verbleibt Polyphosphat, das beim Erkalten zu einem harten festen Polymer erstarrt. Eigenschaften dieses Polymers sind in Tabelle 1 enthalten.

Beispiele 2 - 7: Herstellung von weiteren Polyphosphaten aus verschiedenen aromatischen Diolen.

Nach der Vorschrift des Beispiels 1 wurden weitere Polyphosphate hergestellt (Beispiele 2 - 7), wobei die Ausgangsstoffe geändert wurden, wie in Tabelle 1 angegeben. Eigenschaften der erhaltenen Polyphosphate sind in Tabelle 1 angegeben.

INDAN = 1,1,3,4,6-Pentamethyl-3-(3,5-dimethyl-4-hydroxyphenyl)-indan-5-ol
BPA = 2,2-Bis-(4-hydroxyphenyl) -propan
TMPA = 2,2-Bis-(3,5-dimethyl-4-hydroxphenyl)-propan
TMBPF = Bis-(3,5-dimethyl-4-hydroxyphenyl)-methan
TPP = Trisphenylphosphat
$\eta$ rel = gemessen in $CH_2Cl_2$, c = 5 g/l
$\bar{M}_w$ = fiktives Gewichtwmittel des Molekulargewichts, aus Gelchromatographie, Eichung EPA-Polycarbonat
$T_g$ = Glasübergangstemperatur aus Differentialthermanalyse

Beispiel 8: Herstellung eines Polyphosphats aus 1,1,3,4,6-Pentamethyl-3-(3,5-dimethyl-4-hydroxyphenyl)-indan-5-ol (INDAN) und Dichlorphenylphosphat

48,7 g (0,15 Mol) INDAN, 0,34 g wasserfreies $AlCl_3$ und 31,7 g (0,15 Mol) Dichlorphenylphosphat werden unter $N_2$ und unter Rühren bei 75 - 175° C miteinander umgesetzt. Nach Beendigung der HCl-Abspaltung und Abziehen des HCl-Gases wird eine zähe Schmelze erhalten, die beim Abkühlen zu einem gelblich-braunen spröden Harz erstarrt.

Analytische Daten des Polyphosphats:
$\eta$ rel (s. Tabelle): 1,035
$\bar{M}_w$ (s. Tabelle): 4200
$T_g$ (s. Tabelle): 105°

**Patentansprüche**

1) Polyphosphate, dadurch gekennzeichnet, daß sie 0,5 - 100 Mol% Phosphateinheiten der Formeln (I) und/oder (II),

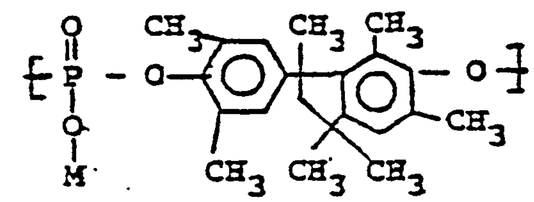
(I)

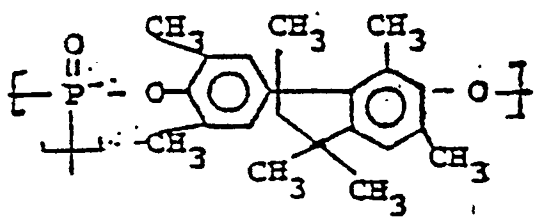
(II)

worin
M H, Alkalimetall, 1/2 Erdalkalimetall, oder -R-OH
wobei
-Y ein Alkyl-, Cycloalkyl-, Aryl- oder Alkylaryl-Rest ist und
-R- für einen o-, m- oder p-Phenylenrest oder einen Rest der Formel

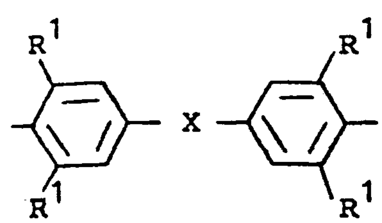
(IIa)

in welcher
$R^1$ für Wasserstoff, Halogen wie Chlor und Brom und $C_1$-$C_3$-Alkyl steht und
X für einen $C_1$-$C_5$-Alkylen- oder Alkylidenrest einen $C_5$-$C_6$-Cycloalkylen oder Cycloalkylidenrest, eine Einfachbindung, -S- oder einen Rest der Formel

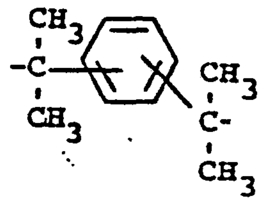

(IIb)

in welcher die beiden Alkylsubstituenten in o-, m- oder p-Stellung zueinander stehen können, bedeutet,
oder einen Rest der Formel (IIc) steht,

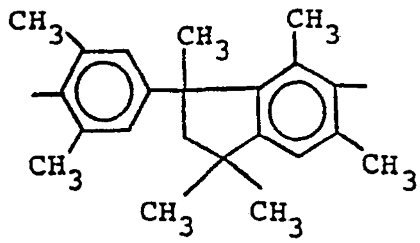

(IIc)

und
95,5 bis 0 Mol-% Phosphateinheiten der Formeln (III) und/oder (IV)

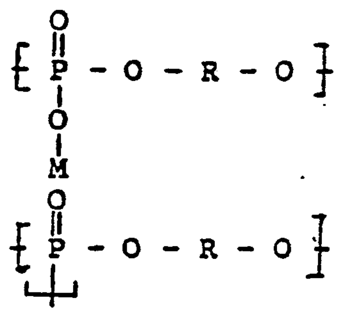

(III)

(IV)

in denen
M die bei Formel (I) angegebene Bedeutung hat und
R für Phenylen oder einen Rest der Formel (IIa) steht, jedoch nicht für einen Rest der Formel (IIc) enthalten.
2) Verfahren zur Herstellung von Polyphosphaten nach Anspruch 1, dadurch gekennzeichnet, daß 0,5 - 100 Mol-% 1,1,3,4,6-Pentamethyl-3-(3,5-dimethyl-4-hy-droxyphenyl)-indan-5-ol der Formel

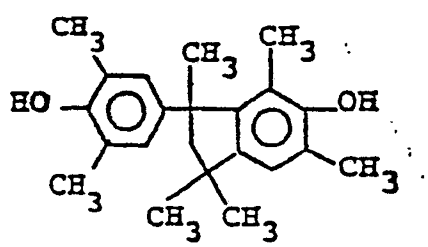

(V)

und 95,5 - 0 Mol-% Hydrochinon, Resorcin oder aromatische Diole der allgemeinen Formel

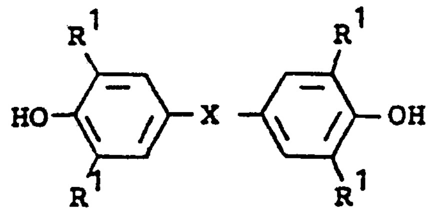

(VI)

worin
$R^1$ für Wasserstoff Halogen und Alkyl steht, und
X für Alkylen, Alkyliden, Cycloalkylen, Cycloalkyliden eine Einfachbindung, -S- oder einen Rest der Formel

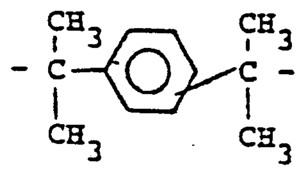

wobei die beiden Alkylensubstituenten o-, moder p zueinander sein können steht,
mit mindestens einem Phosphorsäureester der Formel

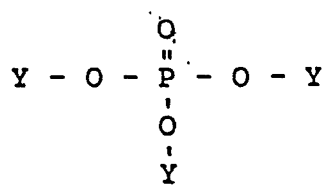

(VII)

in der
Y gleich oder verschieden ist und für eine Alkyl-, Cycloalkyl-, Aryl- oder Alkylarylrest steht,
mit Hilfe basischer Alkali- oder Erdalkaliverbindungen und unter Abspaltung von Alkoholen und/oder Phenolen bei 50 - 350° C umgesetzt werden.

3) Polyphosphate erhalten nach dem Verfahren des Anspruches 2.

4) Verwendung der Polyphosphate nach den Ansprüchen 1 und 3 zur Herstellung von Überzügen und Formkörpern.

5) Verwendung von Polyphosphaten nach den Ansprüchen 1 und 3 als Zusätze zu anderen Polymeren.

**Claims**

1. Polyphosphates, characterised in that they contain 0.5 - 100 mol % of phosphate units of the formulae (I) and/or (II),

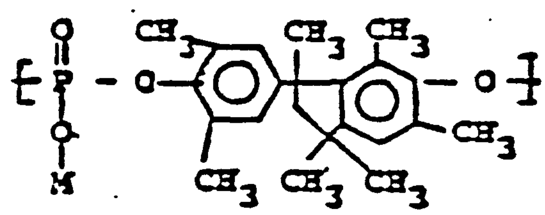

(I)

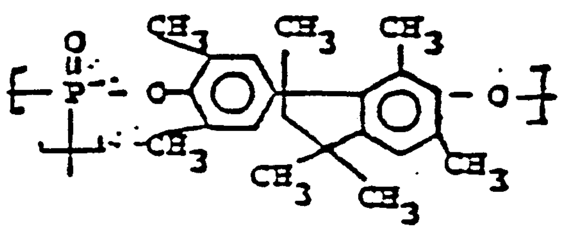

(II)

wherein
M denotes H, an alkali metal, 1/2 alkaline earth metal, Y or -R-OH,
wherein
-Y is an alkyl, cycloalkyl, aryl or alkylaryl radical and
-R- represents an o-, m- or p-phenylene radical or a radical of the formula

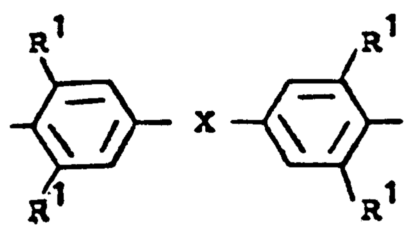

(IIa)

in which
$R^1$ represents hydrogen, halogen such as chlorine and bromine and $C_1$-$C_3$-alkyl and
X represents a $C_1$-$C_5$-alkylene or alkylidene radical, a $C_5$-$C_8$-cycloalkylene or cycloalkylidene radical, a single bond, -S- or a radical of the formula

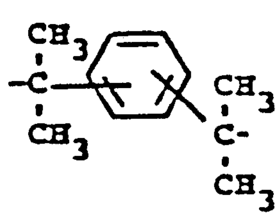

(IIb)

in which the two alkyl substituents can be in the o-, m- or p-position to each other, or a radical of the formula (IIc)

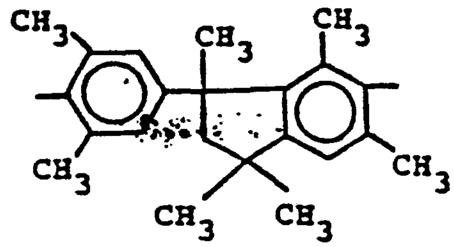

(IIc)

and 95.5 to 0 mol % of phosphate units of the formulae (III) and/or (IV)

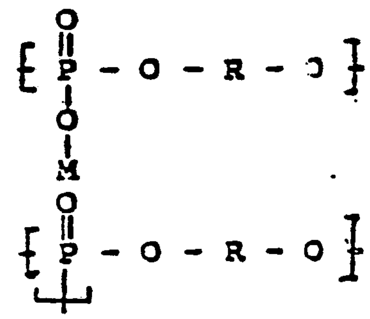

(III)

(IV)

in which

M has the meaning given under formula (I) and

R represents phenylene or a radical of the formula (IIa), but not a radical of the formula (IIc).

2. Process for the production of polyphosphates according to Claim 1, characterised in that 0.5 - 100 mol % of 1,1,3,4,6-pentamethyl-3-(3,5-dimethyl-4-hydroxyphenyl)-indan-5-ol of the formula

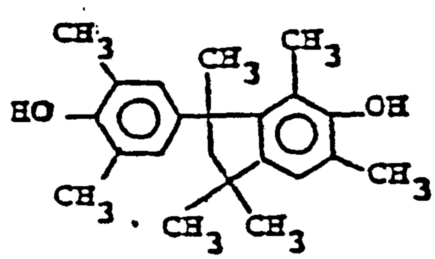

(V)

and 95.5 - 0 mol % of hydroquinone, resorcinol or aromatic diols of the general formula

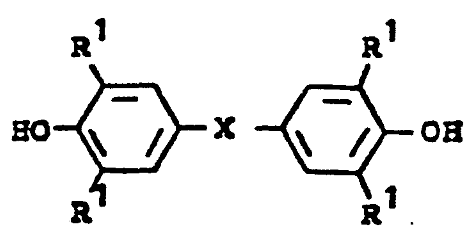

(VI)

wherein
$R^1$ represents hydrogen, halogen and alkyl and
X represents alkylene, alkylidene, cycloalkylene, cycloalkylidene, a single bond, -S- or a radical of the formula

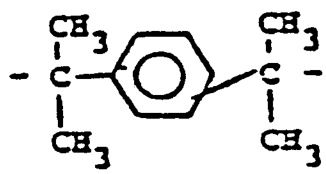

wherein the two alkylene substituents can be in an o-, m- or p-position to each other, are reacted with at least one phosphoric acid ester of the formula

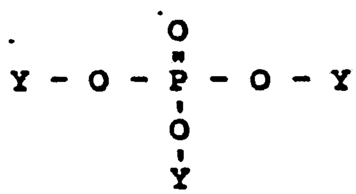

(VII)

in which
Y is identical or different and represents an alkyl, cycloalkyl, aryl or alkylaryl radical,
with the aid of basic alkali metal or alkaline earth metal compounds and with the elimination of alcohols and/or phenols at 50 - 350°C.

3. Polyphosphates obtained by the process of Claim 2.
4. Use of the polyphosphates according to Claims 1 and 3 for the production of coatings and mouldings.
5. Use of polyphosphates according to Claims 1 and 3 as additives for other polymers.

**Revendications**

1. Polyphosphates caractérisés en ce qu'ils contiennent 0,5 à 100 mol% de motifs de phosphates de formules I et/ou II

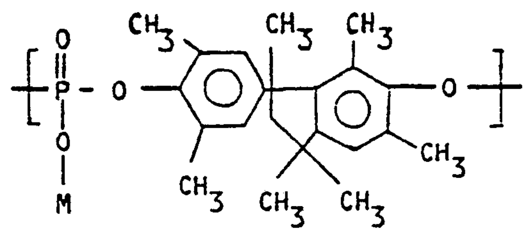

(I),

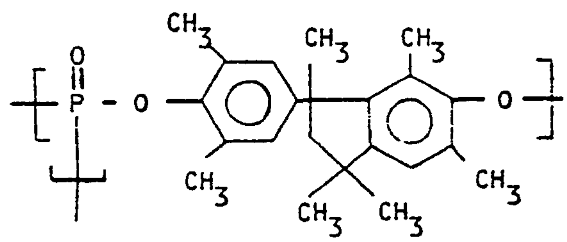

(II),

dans lesquelles
M représente H, un métal alcalin, 1/2 métal alcalino-terreux, Y ou -R-OH, avec
Y = groupe alkyle, cycloalkyle, aryle ou alkylaryle, et
R = groupe o-, m- ou p-phénylène ou groupe de formule

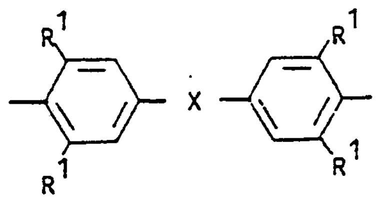

(IIa),

dans laquelle
$R^1$ représente l'hydrogène, un halogène tel que le chlore et le brome ou un groupe alkyle en $C_1$-$C_3$, et
X représente un groupe alkylène ou alkylidène en $C_1$-$C_5$, un groupe cycloalkylène ou cycloalkylidène en $C_5$-$C_6$, une liaison simple, -Sou un groupe de formule

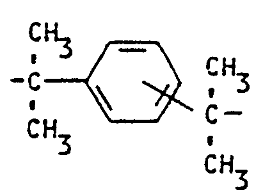

(IIb),

dans laquelle les deux substituants alkyle peuvent être en position mutuelle ortho, méta ou para, ou un groupe de formule IIc

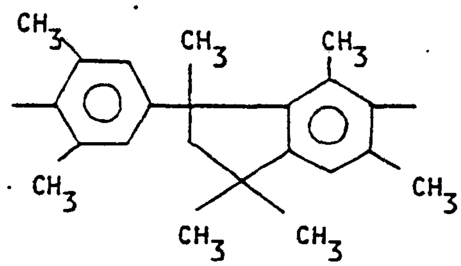

(IIc)

et
95,5 à 0 mo1% de motifs de phosphates de formules III et/ou IV

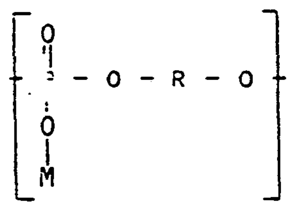

(III)

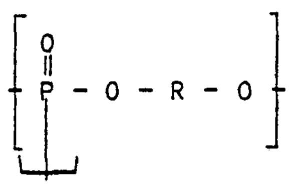

(IV)

dans lesquelles
M a les significations indiquées en référence à la formule I, et
R représente un groupe phénylène ou un groupe de formule IIa mais non un groupe de formule IIc.

2. Procédé de préparation des polyphosphates selon la revendication 1, caractérisé en ce que l'on fait réagir de 0,5 à 100 mo1% de 1,1,3,4,6-pentaméthyl-3-(3,5-diméthyl-4-hydroxyphényl)-indane-5-ol de formule

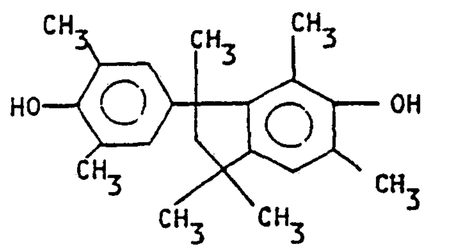

(V),

et 95,5 mol% à 0 mol% d'hydroquinone, de résorcinol ou de diols aromatiques de fornule générale

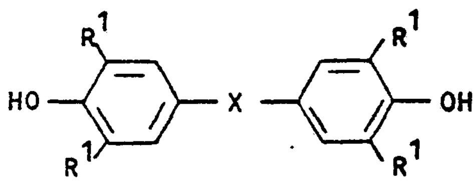 (VI),

dans laquelle
$R^1$ représente l'hydrogène, un halogène ou un groupe alkyle, et
X représente un groupe alkylène, alkylidène, cycloalkylène, cycloalkylidène, une liaison simple, -S- ou un groupe de formule

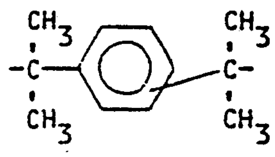

les deux substituants alkyle pouvant être en position mutuelle ortho, méta ou para, avec au moins un ester phosphorique de formule

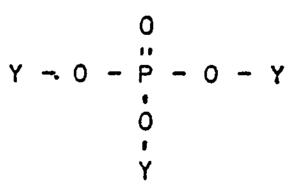 (VII),

dans laquelle
les symboles Y, ayant des significations identiques ou différentes, représentent chacun un groupe alkyle, cycloalkyle, aryle ou alkylaryle,
à l'aide de composés alcalins ou alcalino-terreux basiques et avec scission d'alcools et/ou de phénols à des températures de 50 à 350° C.

3. Les polyphosphates obtenus par le procédé de la revendication 2.

4. L'utilisation des polyphosphates selon les revendications 1 et 3 pour l'application de revêtements et la préparation de corps moulés.

5. L'utilisation des polyphosphates selon les revendications 1 et 3 en tant qu'additifs à d'autres polymères.